# DEMANDE DE BREVET EUROPEEN

(11) **EP 0 786 308 A1**
(43) Date de publication de la demande: **30.07.1997**
(21) Numéro de dépôt: 96420291.5
(22) Date de dépôt: 16.09.1996
(51) Int. Cl.: B23Q 3/00

(54) **Ensemble de guidage pour machines outils, notamment pour machines à bois**

(30) Priorité: 26.01.1996 FR 9601199
(71) Demandeur: Elbe S.A., 42603 Montbrison (FR)
(72) Inventeur: Brunel, Lucien, 42600 Montbrison (FR)
(74) Mandataire: Thivillier, Patrick

(57) **Abrégé**

L'ensemble de guidage pour machines-outils, notamment pour machines à bois, comprend deux éléments indépendants (1) adaptés pour être fixés d'une manière démontable sur une partie de la machine de part et d'autre d'un outil de coupe (O). Selon l'invention, est revendiqué que chaque élément (1) présente des agencements internes (1c) aptes à recevoir un ou des organes protecteurs indépendants (2) dont le nombre et le profil sont fonction du type d'outil de coupe considéré (O), le ou lesdits organes (2), après montage dans les agencements (1c), ne laissant apparaître que la partie active de l'outil de coupe (O) destinée à coopérer avec la pièce à travailler qui est déplacée le long des éléments de guidage (1).

## Description

L'invention se rattache au secteur technique des accessoires pour machines-outils, notamment pour machines à bois équipées d'une tête recevant l'outil généralement sous forme d'une toupie rotative.

Ce type de machine est parfaitement connu par un homme du métier et présente pour l'essentiel une table rectifiée sur laquelle sont déplacées les pièces de bois à travailler par rapport à la tête de coupe. L'outil que présente la tête est généralement constitué par une toupie dont le profil de denture est différent en fonction du type de travail à effectuer. Des guides sont montés de part et d'autre de l'outil de coupe pour permettre le déplacement linéaire manuel de la pièce par rapport audit outil. L'opérateur applique la pièce à travailler sur les guides et la déplace à l'encontre de la partie active de l'outil de coupe.

Dans la plupart des cas, ces guides sont constitués par de simples planches en bois fixées verticalement au niveau de la tête de travail, de part et d'autre de l'outil de coupe. Compte tenu de ces dispositions, des risques importants de blessure ne sont pas à exclure au fur et à mesure du travail de la pièce. En effet, lorsqu'un opérateur déplace la pièce le long des guides, il peut accidentellement mettre les mains au niveau de l'outil de coupe. Le même problème peut apparaitre également lors du réglage des outils.

Pour tenter de remédier à ces inconvénients, et améliorer la sécurité de l'opérateur, on a proposé des solutions permettant de protéger l'outil de coupe de sorte que seule sa partie active peut être accessible. Pour réaliser cette fonction, il a été conçu des guides de construction spécifique. Par exemple, l'un des guides peut présenter d'une manière rapportée une plaque d'appui composée d'une pluralité de nervures rectilignes débouchantes et parallèles. L'autre guide présente, de la même façon, une plaque très sensiblement identique à la seule différence que son extrémité libre est équipée d'une pluralité de plaquettes articulées en bout de chacune des rainures de la plaque. Après mise en place de chacun des guides, les plaquettes sont déployées pour être imbriquées dans les rainures correspondantes de la plaque opposée, de manière à interdire l'accès à l'outil de coupe considéré et en laissant seulement déborder la partie active dudit outil de coupe. Il suffit donc de déployer un nombre de plaquettes en fonction du profil et des dimensions de l'outil de coupe considéré.

Cette solution donne satisfaction dans son ensemble, mais est d'un coût de revient particulièrement élevé compte tenu des moyens mis en oeuvre et du nombre important des pièces considérées. On souligne également que si l'outil attaque accidentellement les plaques rainurées, il n'est plus possible de les réutiliser étant donné qu'il n'est plus possible de les réusiner. A noter également qu'après positionnement des différentes barrettes, ces dernières ne sont pas disposées de manière jointive, laissant ainsi passer l'air, ce qui limite l'aspiration des copeaux.

D'autres solutions mettent en oeuvre des éléments protecteurs qu'il est possible de monter par rapport à chacun des guides. Toutefois, la mise en place de ces éléments protecteurs nécessite l'emploi d'outils appropriés. L'adaptation n'est donc pas immédiate. Là encore, cette solution n'est pas satisfaisante.

L'invention s'est fixée pour but de remédier à ces inconvénients de manière simple, sûre, efficace et rationnelle.

Le problème que se propose de résoudre l'invention est de pouvoir équiper chacun des guides d'organes de protection totalement indépendants sans nécessiter l'utilisation d'outils appropriés, les organes pouvant être montés par rapport à chacun des guides d'une manière instantanée en fonction du type d'outil de coupe à protéger.

Pour résoudre ce problème, il a été conçu et mis au point un ensemble de guidage pour machines-outils, notamment pour machines à bois, comprenant deux éléments indépendants adaptés pour être fixés verticalement, d'une manière démontable, sur une partie de la machine, de part et d'autre d'un outil de coupe, caractérisé en ce que chaque élément présente des agencements aptes à recevoir un ou des organes protecteurs indépendants dont le nombre et le profil sont fonction du type d'outil de coupe considéré, le ou lesdits organes, après montage dans les agencements, ne laissant apparaître que la partie active de l'outil de coupe destinée à coopérer avec la pièce à travailler qui est déplacée le long des éléments de guidage.

Pour résoudre le problème posé de pouvoir adapter facilement le ou les organes protecteurs sur chacun des éléments de guidage sans nécessiter l'emploi d'outils quelconques :
- les agencements sont constitués par une pluralité d'alvéoles rectilignes parallèles formées dans l'épaisseur de chacun des éléments pour permettre le montage par emboitement des organes protecteurs ;
- les alvéoles sont formées parallèlement aux bords longitudinaux des éléments, dans le même plan vertical, et débouchent au moins du côté des éléments disposé en regard de l'outil de coup ;
- les alvéoles sont formées sur toute la hauteur de chacun des éléments et sur la totalité de leur longueur ;
- les alvéoles sont de section transversale quadrangulaire.

Le problème posé d'assurer la fixation du ou des organes protecteurs par rapport aux éléments de guidage, est résolu en ce que les organes protecteurs présentent des portées d'assemblage opposées dont la section correspond à celle des alvéoles. Après mise en place en superposition des organes protecteurs dans les alvéoles correspondantes, ces derniers délimitent, de part et d'autre de la partie active de travail de l'outil de coupe, une surface ne présentant aucun interstice pour permettre en conséquence une meilleure aspiration des copeaux.

Un autre problème que se propose de résoudre l'invention est de pouvoir équiper chacun des guides d'accessoires divers, notamment d'éléments de butée. Pour résoudre un tel problème, l'alvéole de chaque élément situé dans sa partie supérieure est débouchante par rapport au champ rectiligne supérieur dudit élément, pour constituer une rainure de section transversale profilée très sensiblement en T pour le montage à coulissement d'accessoires.

L'invention est également remarquable par les caractéristiques suivantes :
- chacun des éléments est constitué par un profilé en aluminium ;
- les faces verticales de chaque élément disposées en regard au niveau de l'outil de coupe, sont biseautées.

Pour résoudre le problème posé, d'une part, de pouvoir monter facilement chacun des éléments de guidage sur la machine et, d'autre part, équiper en combinaison ces éléments de guidage du ou des organes protecteurs correspondants, la face latérale interne de chaque élément présente une rainure en T pour leur montage avec capacité de réglage en translation par rapport à la partie de la machine recevant lesdits éléments.

L'invention est exposée ci-après plus en détail à l'aide des dessins annexés dans lesquels :
- la figure 1 est une vue en perspective à caractère schématique d'une machine à bois équipée de l'ensemble de guidage selon l'invention

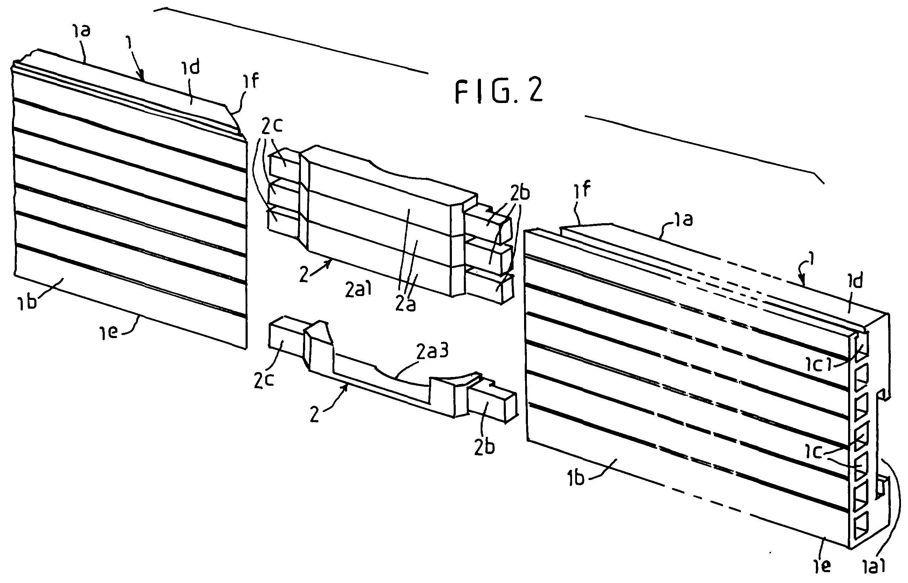

- la figure 2 est une vue en perspective avant montage des différents éléments constitutifs de l'ensemble de guidage ;

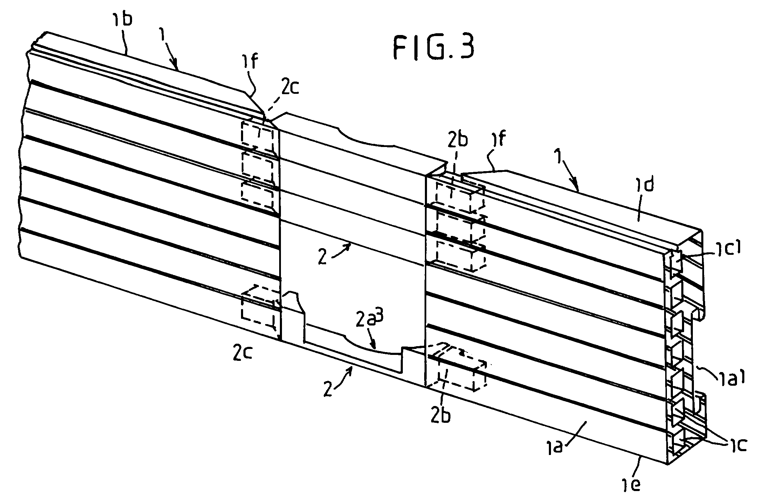

- la figure 3 est une vue en perspective correspondant à la figure 2 après montage des éléments constitutifs de l'ensemble de guidage ;
- la figure 4 est une vue de face de l'ensemble de guidage monté sur une partie de la machine par rapport à un outil de coupe déterminé ;
- la figure 5 est une vue semblable à la figure 4 montrant l'adaptation des organes protecteurs pour un autre profil d'outil de coupe ;
- la figure 6 est une vue en coupe transversale considérée sur la ligne 6-6 de la figure 4 ;

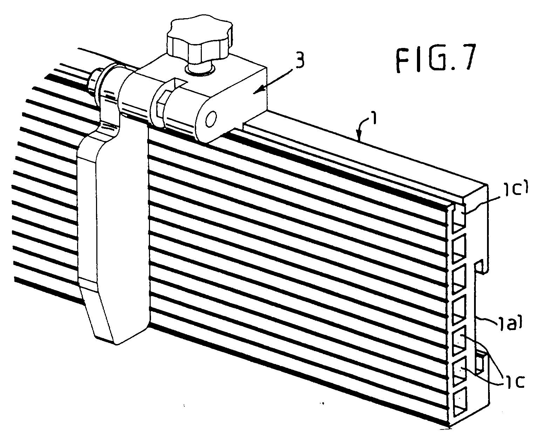

- la figure 7 est une vue en perspective montrant l'adaptation d'accessoires sur les éléments de guidage.

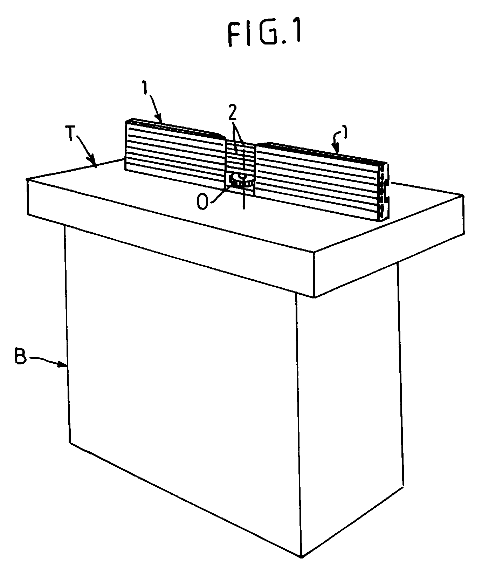

Comme le montre la figure 1, l'ensemble de guidage est plus particulièrement destiné à être appliqué dans le cas d'une machine à bois du type de celle illustrée.

On rappelle pour une meilleure compréhension de la suite de la description, que ce type de machine comprend un bâti (B) recevant une table rectifiée (T) sur laquelle apparaît la tête de travail équipée de l'outil de coupe (O) généralement sous forme d'une toupie. L'ensemble de guidage comprend deux éléments indépendants identiques (1). Ces éléments (1) sont destinés à être fixés verticalement sur la table rectifiée de part et d'autre de l'outil de coupe (O).

Selon l'invention, chaque élément de guidage (1) est avantageusement exécuté à partir d'un profilé extrudé en aluminium en présentant deux faces d'appui rectangulaires (1a) et (1b). La face arrière (1a) est destinée à coopérer avec des agencements de fixation que présente une partie de la machine. Par exemple chacune des faces (1a) présente une rainure profilée en T (1a1) pour être engagée par coulissement dans une nervure complémentaire que présente la machine au niveau de la tête de travail. La face (1b) est destinée à recevoir en appui la pièce à travailler qui est appliquée sur la table rectifiée pour être déplacée en direction de l'outil (O) en étant guidée par les éléments (1).

Selon une caractéristique importante, chacun des éléments (1) présente une pluralité d'alvéoles rectilignes (1c) formées parallèlement dans l'épaisseur de chacun desdits éléments. Les différentes alvéoles (1c) sont identiques et formées parallèlement aux bords longitudinaux supérieur et inférieur (1d) et (1e) des éléments (1) en étant superposées dans le même plan vertical. En outre, les différentes alvéoles (1c) sont formées sur toute la hauteur de chacun des éléments (1) et sur la totalité de leur longueur. L'ensemble des alvéoles (1c) débouche de chacun des côtés transversaux des éléments. Les alvéoles (1c) sont de section quadrangulaire, notamment carrée ou rectangulaire.

Ces différentes alvéoles sont destinées à recevoir en combinaison, de manière séparée, un ou des organes protecteurs (2) conformés pour caréner l'outil de coupe (O) en ne laissant apparaître que la partie active dudit outil destiné à coopérer avec la pièce à travailler déplacée le long des éléments de guidage (1). Chaque organe protecteur (2) présente une partie centrale (2a) sous forme d'un corps très sensiblement parallélépipédique, prolongé par deux portées d'assemblage opposées (2b) et (2c) destinées à être engagées par emboitement dans les alvéoles (1c). La section transversale des portées d'assemblage (2b) et (2c) est donc complémentaire de la section interne des différentes alvéoles. D'une manière importante après montage des organes protecteurs (2) dans les alvéoles correspondantes (1c), les différentes parties centrales (2a) desdits organes constituent une surface continue (2a1) exempte de tout interstice.

A noter que la face latérale interne (2a2) du corps (2a) peut présenter, sensiblement dans sa partie médiane, une échancrure (2a3) pour le passage de l'arbre vertical de commande de l'outil (O).

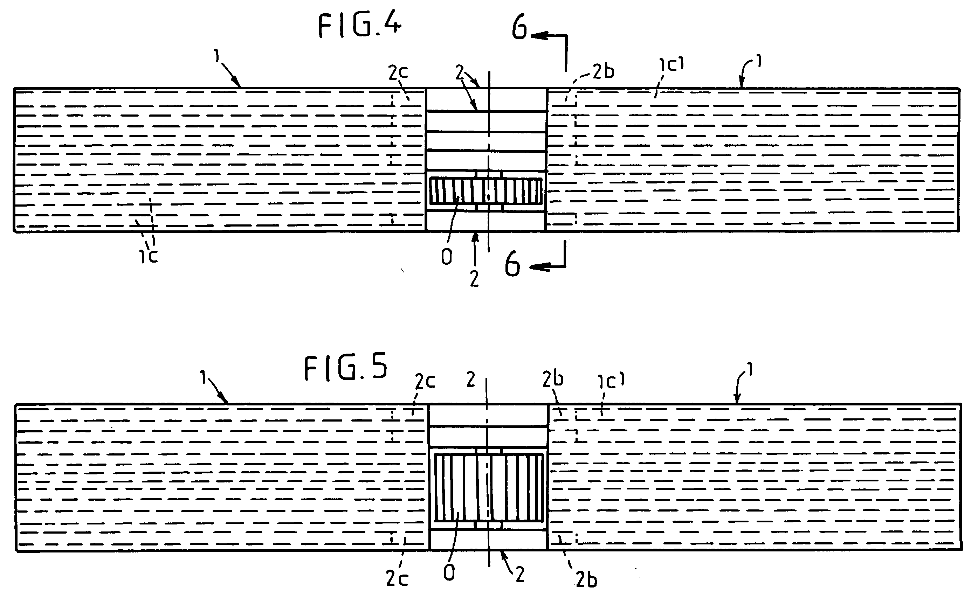

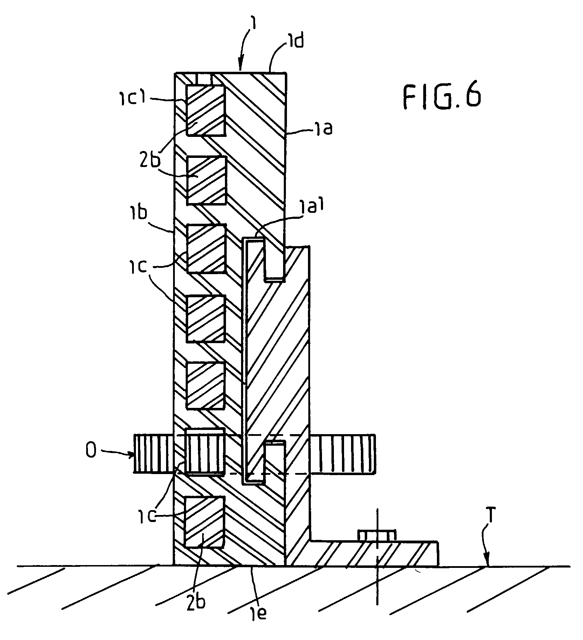

En fonction du type d'outil, l'opérateur dispose par exemple d'un seul organe protecteur (2) pour combler l'espace entre la face inférieure de l'outil de coupe (O) et la table rectifiée (T), et plusieurs organes protecteurs (2) pour combler l'espace entre la partie supérieure dudit outil et l'extrémité supérieure des guides (1). On renvoie aux figures 4 et 5 montrant l'adaptation des organes protecteurs en fonction du type d'outil employé.

Le montage des organes protecteurs (2) par rapport à chacun des éléments de guidage (1) est particulièrement simple et rapide. Après avoir fixé l'un des éléments sur la partie correspondante de la machine-outil, l'opérateur engage le nombre d'organes protecteurs (2) déterminés dans les alvéoles correspondantes (1c) dudit élément (1) en fonction du profil d'outil de coupe considéré de manière à ne laisser apparaître que la partie active de ce dernier comme indiqué. Il suffit ensuite de monter l'autre élément de guidage (1) et de l'adapter par coulissement au moyen de sa rainure en T pour engager les différentes alvéoles sur les portées d'assemblage correspondantes (2b) des organes protecteurs (2).

A noter que les côtés verticaux (1f) de chacun des guides (1) disposés de part et d'autre de l'outil de coupe (O) sont biseautés. De même, l'alvéole (1c1) de chaque élement situé dans sa partie supérieure est débouchante par rapport au champ rectiligne correspondant dudit élément pour constituer une rainure de section transversale profilée très sensiblement en T pour le montage à coulissement de différents accessoires (3) (voir figure 6).

Les avantages ressortent bien de la description. En particulier, on souligne et on rappelle :
- l'indépendance totale des organes protecteurs par rapport à chacun des éléments de guidage;
- l'adaptation des organes protecteurs par rapport aux éléments de guidage sans nécessiter l'emploi d'outils ;
- la possibilité de réusiner les bords verticaux des éléments de guidage lorsque l'outil de coupe attaque accidentellement chacun des éléments de guidage ;
- après montage en superposition des différents organes protecteurs, ces derniers délimitent une surface de protection continue ne présentant aucun interstice ;
- le coût de revient réduit de l'ensemble résultant de la facilité d'usinage des éléments de guidage ;
- le nombre de pièces réduit ;
- l'efficacité du résultat obtenu.

## Revendications

1. Ensemble de guidage pour machines-outils, notamment pour machines à bois, comprenant deux éléments indépendants (1) adaptés pour être fixés d'une manière démontable sur une partie de la machine de part et d'autre d'un outil de coupe (O), caractérisé en ce que chaque élément (1) présente des agencements internes (1c) aptes à recevoir un ou des organes protecteurs indépendants (2) dont le nombre et le profil sont fonction du type d'outil de coupe considéré (O), le ou lesdits organes (2), après montage dans les agencements (1c), ne laissant apparaître que la partie active de l'outil de coupe (O) destinée à coopérer avec la pièce à travailler qui est déplacée le long des éléments de guidage (1).

2. Ensemble selon la revendication 1, caractérisé en ce que les agencements sont constitués par une pluralité d'alvéoles rectilignes parallèles (1c) formées dans l'épaisseur de chacun des éléments (1) pour permettre le montage par emboitement des organes protecteurs (2).

3. Ensemble selon la revendication 2, caractérisé en ce que les alvéoles (1c) sont formées parallèlement aux bords longitudinaux des éléments en étant superposées dans le même plan vertical, et débouchent au moins du côté (1f) des éléments disposé en regard de l'outil de coupe (O).

4. Ensemble selon la revendication 2, caractérisé en ce que les alvéoles (1c) sont formées sur toute la hauteur de chacun des éléments (1) et sur la totalité de leur longueur.

5. Ensemble selon la revendication 2, caractérisé en ce que les alvéoles (1c) sont de section transversale quadrangulaire.

6. Ensemble selon l'une quelconque des revendications 1 et 5, caractérisé en ce que les organes protecteurs (2) présentent des portées d'assemblage opposées (2b-2c) dont la section correspond à celle des alvéoles (1c).

7. Ensemble selon la revendication 2, caractérisé en ce que l'alvéole (1c1) de chaque élément situé dans sa partie supérieure est débouchante par rapport au champ rectiligne supérieur dudit élément (1), pour constituer une rainure de section transversale profilée très sensiblement en butée pour le montage à coulissement d'accessoires.

8. Ensemble selon la revendication 1, caractérisé en ce que chacun des éléments (1) est constitué par un profilé en aluminium.

9. Ensemble selon la revendication 1, caractérisé en ce que les faces verticales de chaque élément disposées en regard au niveau de l'outil de coupe, sont biseautées.

10. Ensemble selon la revendication 1, caractérisé en ce que la face latérale interne (1a) de chaque élément présente une rainure en T (1a1) pour leur montage avec capacité de réglage en translation par rapport à la partie de la machine recevant lesdits éléments.
